# EUROPEAN PATENT APPLICATION

(11) **EP 4 708 472 A1**
(43) Date of publication of application: **11.03.2026**
(21) Application number: 25768558.6
(22) Date of filing: 28.02.2025
(51) Int. Cl.: H01M 50/105, H01M 50/471, H01M 50/593, H01M 50/20

(54) **BATTERY CELL HAVING IMPROVED STRUCTURE AND BATTERY MODULE INCLUDING SAME**

(30) Priority: 08.03.2024 KR 20240033077
(71) Applicant: LG Energy Solution, Ltd., Seoul 07335 (KR)
(72) Inventor: KIM, Sang Wu, Daejeon 34122 (KR); CHOI, Myeong Hun, Daejeon 34122 (KR); YOO, Ji Hyeok, Daejeon 34122 (KR); KIM, Do Hyoung, Daejeon 34122 (KR); AHN, Se Young, Daejeon 34122 (KR); GU, Dae Geun, Daejeon 34122 (KR)
(74) Representative: BCKIP Part mbB
(86) International application number: PCT/KR2025/002834
(87) International publication number: WO 2025/188034

(57) **Abstract**

Disclosed are a battery cell with an improved structure and a battery module including the same, and more particularly a battery cell including an electrode assembly having an electrode tab protruding therefrom, the electrode assembly including a positive electrode, a separator, and a negative electrode, a pair of cover separators located so as to wrap the electrode assembly, the pair of cover separators including a first cover separator and a second cover separator, a pouch case configured to receive the electrode assembly and the pair of cover separators, an electrode lead having one side connected to the electrode tab and an other side protruding outward from the pouch case, and an insulating film located between the pouch case and the electrode lead and a battery module including the same.

## Description

### [Technical Field]

This application claims the benefit of priority to Korean Patent Application No. 2024-0033077 filed on March 8, 2024, the disclosure of which is incorporated herein by reference in its entirety.

The present invention relates to a battery cell with an improved structure and a battery module including the same, and more particularly to a battery cell with an improved structure including a cover separator configured to wrap an electrode assembly, thereby preventing defects caused by deviations in position-specific height of the battery cell, and a battery module including the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, in order to fix an electrode assembly formed by stacking a positive electrode, a negative electrode, and a separator in a process of manufacturing a battery cell, a tape made of PET or the like is attached to a part of the electrode assembly to fix the same.

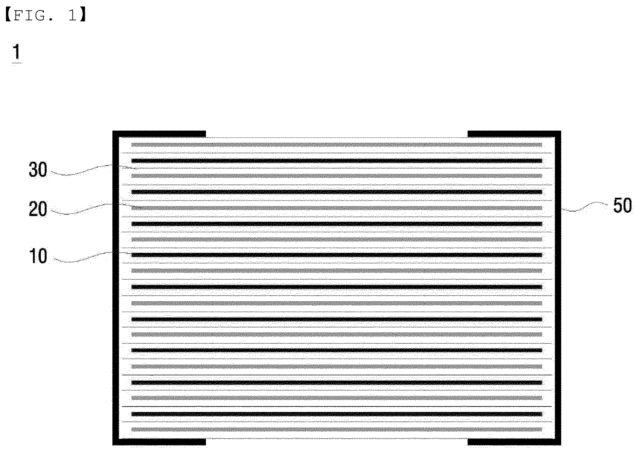

FIG. 1 is a sectional view showing a conventional cell assembly for pouch-shaped secondary batteries. As shown in FIG. 1, the conventional cell assembly 1 for secondary batteries is configured such that electrode plates 10 and 20 and separators 30 are stacked, and the separators 30 disposed on the uppermost layer and the lowermost layer are fixed using a plurality of tapes 50.

In case of fixation using tapes, the tapes are attached to wrap around a part of an upper surface, a side surface, and a part of a lower surface of the electrode assembly, whereby the tapes are located on a part of the upper surface and part of the lower surface, resulting in position-specific height deviations of the electrode assembly.

In addition, an adhesive layer of the tape reacts with an electrolyte solution, causing problems such as browning of the separator and depletion of the electrolyte solution, and when gas generated by the use of the battery cell is captured in a terrace portion in a pouch case and reaches a critical point, the gas penetrates into the cell assembly 1 for secondary batteries, whereby the electrode plates 10 and 20 and the separator 30 may be separated from each other.

### (Prior Art Document)

(Patent Document 1) Korean Registered Patent Publication No. 10-1951783

### [Disclosure]

### [Technical Problem]

The present invention has been made in view of the above problems, and it is an object of the present invention to provide a battery cell with an improved structure including a cover separator configured to wrap an electrode assembly, thereby preventing separation between components of the electrode assembly due to gas generated in the battery cell and inhibiting position-specific height deviations, and a battery module including the same.

### [Technical Solution]

A battery cell according to the present invention to accomplish the above object includes an electrode assembly (100) having an electrode tab (110) protruding therefrom, the electrode assembly including a positive electrode, a separator, and a negative electrode, a pair of cover separators (200) located so as to wrap the electrode assembly (100), the pair of cover separators including a first cover separator (210) and a second cover separator (220), a pouch case (300) configured to receive the electrode assembly (100) and the pair of cover separators (200), an electrode lead (400) having one side connected to the electrode tab (110) and an other side protruding outward from the pouch case, and an insulating film (500) located between the pouch case (300) and the electrode lead (400).

Also, in the battery cell according to the present invention, the first cover separator (210) may include a first side surface portion (211) in tight contact with one side surface of the electrode assembly (100), a first upper surface portion (212) in tight contact with a part of an upper surface of the electrode assembly (100), and a first lower surface portion (213) in tight contact with a part of a lower surface of the electrode assembly (100), and the second cover separator (220) may include a second side surface portion (221) in tight contact with an other side surface of the electrode assembly (100), a second upper surface portion (222) in tight contact with a part of the upper surface of the electrode assembly (100), and a second lower surface portion (223) in tight contact with a part of the lower surface of the electrode assembly (100).

Also, in the battery cell according to the present invention, the first side surface portion (211) may have a first through-hole (211') configured to allow the electrode tab (110) provided on one side of the electrode assembly (100) to extend therethrough, and the second side surface portion (221) may have a second through-hole (221') configured to allow the electrode tab (110) provided on an other side of the electrode assembly (100) to extend therethrough.

Also, in the battery cell according to the present invention, the sum of lengths (Y-axis direction) of the first upper surface portion (212) and the second upper surface portion (222) may be equal to the length (Y-axis direction)of the electrode assembly (100), and the sum of lengths (Y-axis direction) of the first lower surface portion (213) and the second lower surface portion (223) may be equal to the length (Y-axis direction) of the electrode assembly (100).

Also, in the battery cell according to the present invention, the length (Y-axis direction) of each of the first upper surface portion (212), the second upper surface portion (222), the first lower surface portion (213), and the second lower surface portion (223) may be half of the length (Y-axis direction) of the electrode assembly (100).

Also, in the battery cell according to the present invention, the separator and the pair of cover separators (200) may be made of the same material.

Also, in the battery cell according to the present invention, abutting parts of the first cover separator (210) and the second cover separator (220) may be connected to each other.

Also, in the battery cell according to the present invention, the width (X-axis direction) of each of the first cover separator (210) and the second cover separator (220) may be equal to or greater than the width (X-axis direction) of the electrode assembly (100).

Also, in the battery cell according to the present invention, the abutting parts of the first cover separator (210) and the second cover separator (220) may be connected to each other via an adhesive member.

Also, in the battery cell according to the present invention, the abutting parts of the first cover separator (210) and the second cover separator (220) may be connected to each other through a lamination process.

In addition, the present invention provides a battery module including the battery cell.

### [Advantageous Effects]

As is apparent from the above description, a battery cell with an improved structure according to the present invention and a battery module including the same have the advantage that a cover separator wraps the entirety of an upper surface and a lower surface of an electrode assembly, whereby it is possible to inhibit position-specific height deviations.

In addition, the battery cell according to the present invention and the battery module including the same have the advantage that the cover separator wraps a side surface of the electrode assembly on which an electrode tab is provided, whereby it is possible to prevent gas generated in the battery cell from penetrating into the electrode assembly from a terrace portion.

### [Description of Drawings]

FIG. 1 is a sectional view showing a conventional cell assembly for pouch-shaped secondary batteries.
FIG. 2 is an exploded perspective view showing a battery cell according to a preferred embodiment of the present invention.
FIG. 3 is an exploded perspective view showing an electrode assembly in the battery cell according to the preferred embodiment of the present invention.
FIG. 4 is a sectional view showing the battery cell according to the preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery cell with an improved structure according to the present invention and a battery module including the same will be described with reference to the accompanying drawings.

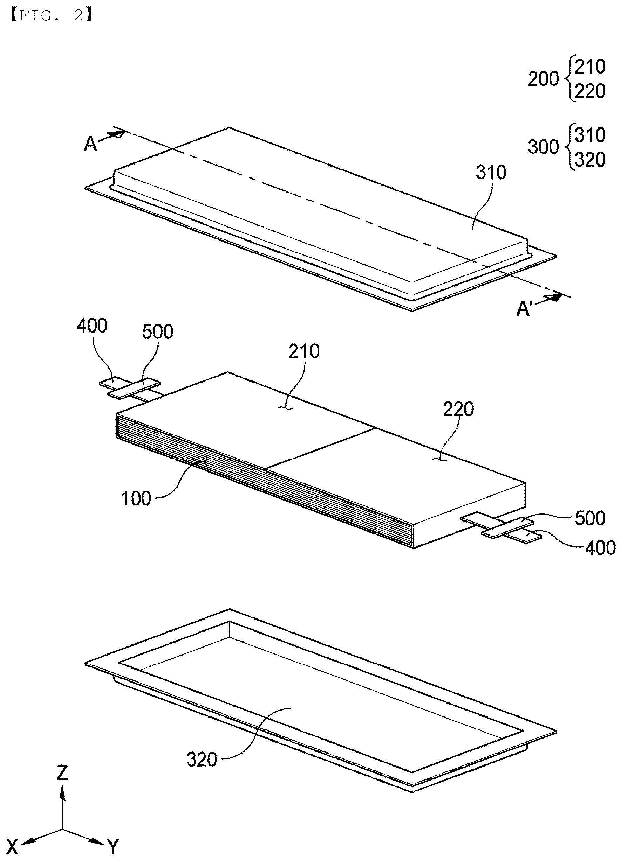

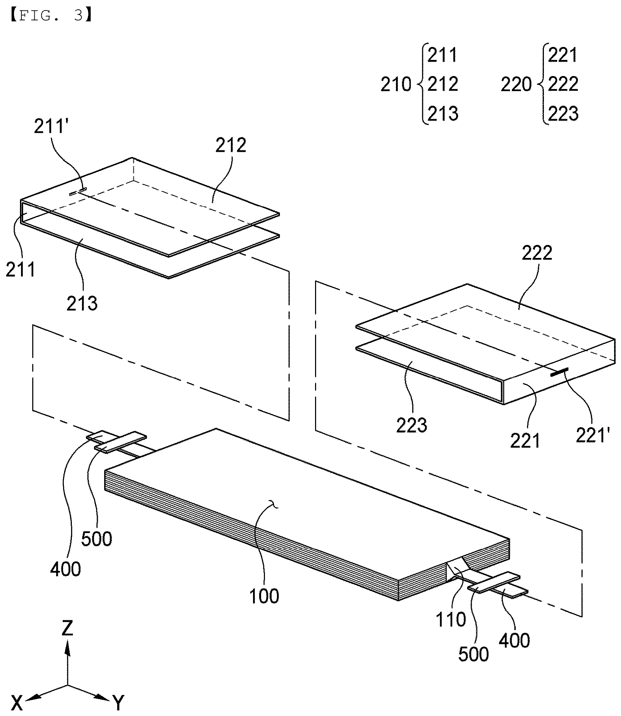

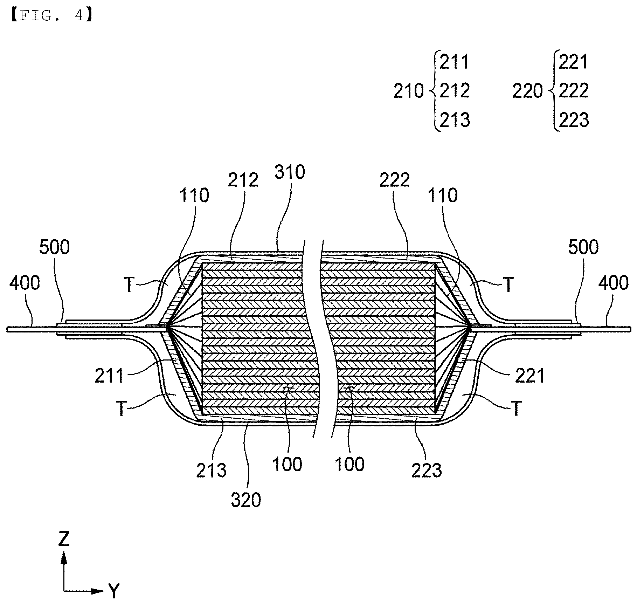

FIG. 2 is an exploded perspective view showing a battery cell according to a preferred embodiment of the present invention, FIG. 3 is an exploded perspective view showing an electrode assembly in the battery cell according to the preferred embodiment of the present invention, and FIG. 4 is a sectional view showing the battery cell according to the preferred embodiment of the present invention.

Referring to FIGs. 2 to 4, the battery cell according to the preferred embodiment of the present invention includes an electrode assembly 100, a cover separator 200, a pouch case 300, an electrode lead 400, and an insulating film 500.

First, the electrode assembly 100 is configured to have a structure in which positive electrodes and negative electrodes are alternately stacked a plurality of times in the state in which separators are interposed therebetween, and a pair of electrode leads 400 constituted by a positive electrode lead and a negative electrode lead is exposed to the outside of the pouch case 300 in a state of being electrically connected to positive tabs and negative tabs, respectively.

The positive electrode is manufactured by applying a positive electrode mixture including a positive electrode active material to a positive electrode current collector and drying the same, and the positive electrode mixture may optionally further include a binder, a conductive agent, or a filler, as needed.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

The negative electrode is manufactured by applying a negative electrode mixture including a negative electrode active material to a negative electrode current collector and drying the same, and the negative electrode mixture may further include a component, such as a conductive agent, a binder, or a filler, as needed.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. Furthermore, in the same manner as the positive electrode current collector, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

The separator prevents short circuit between the negative electrode and the positive electrode and allows only migration of lithium ions, and an insulating thin film having high ion permeability and mechanical strength is used as the separator. The pore diameter of the separator is typically 0.01 to 10 µm, and the thickness of the separator is typically 5 to 300 µm. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, each of the negative electrode current collector and the positive electrode current collector includes a part to which a slurry including the active material is applied and an uncoated portion, which is a part to which no slurry mixture is applied, wherein the uncoated portion is cut to form an electrode tab 110, or a separate conductive member is connected to the uncoated portion by ultrasonic welding to form an electrode tab, and electrode tabs 110 are gathered to form a tab bundle.

The cover separator 200, which wraps the electrode assembly 100, includes a first cover separator 210 and a second cover separator 220.

The cover separator 200 may be made of the same material as the separator included in the electrode assembly 100, and it is preferable for the cover separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Abutting parts of the first cover separator 210 and the second cover separator 220 may be connected to each other, wherein the abutting parts may be connected to each other via an adhesive member, or may be connected to each other through a lamination process, and a method of connecting the abutting parts is not particularly restricted as long as the method does not result in a position-specific height (Z-axis direction) deviation of the electrode assembly 100 wrapped by the first cover separator 210 and the second cover separator 220.

The width (X-axis direction) of each of the first cover separator 210 and the second cover separator 220 may be formed so as to be equal to or greater than the width (X-axis direction) of the electrode assembly 100, which is because, if the width (X-axis direction) of each of the first cover separator 210 and the second cover separator 220 is less than the width (X-axis direction) of the electrode assembly 100, a part of an upper surface or a lower surface of the electrode assembly 100 may not be wrapped by the first cover separator 210 and the second cover separator 220, and the unwrapped part may have a relatively low height (Z-axis direction), resulting in a height deviation.

The first cover separator 210 is located so as to wrap a part of one side of the electrode assembly 100, and includes a first side surface portion 211 in tight contact with one side surface of the electrode assembly 100 from which the electrode tabs 110 protrude, a first upper surface portion 212 in tight contact with a part of the upper surface of the electrode assembly 100, and a first lower surface portion 213 in tight contact with a part of the lower surface of the electrode assembly 100.

Since the first side surface portion 211 is in tight contact with one side surface of the electrode assembly 100 from which the electrode tabs 110 protrude, the first side surface portion may have a first through-hole 211' through which the electrode tabs 110 extend.

Since the first side surface portion 211 is located in tight contact with one side surface of the electrode assembly 100, the first side surface portion may be located at a terrace portion T formed in the battery cell at one side thereof.

Gas generated by charging and discharging of the battery cell may be gathered in the terrace portion T, and the first side surface portion 211 may prevent permeation of the gas in a direction toward the electrode assembly 100.

The second cover separator 220 is located so as to wrap a part of the other side of the electrode assembly 100, and includes a second side surface portion 221 in tight contact with the other side surface of the electrode assembly 100 from which the electrode tabs 110 protrude, a second upper surface portion 222 in tight contact with a part of the upper surface of the electrode assembly 100, and a second lower surface portion 223 in tight contact with a part of the lower surface of the electrode assembly 100.

Since the second side surface portion 221 is in tight contact with the other side surface of the electrode assembly 100 from which the electrode tabs 110 protrude, the second side surface portion may have a second through-hole 221' through which the electrode tabs 110 extend.

Since the second side surface portion 221 is located in tight contact with the other side surface of the electrode assembly 100, the second side surface portion may be located at a terrace portion T formed in the battery cell at the other side thereof.

Similarly to the first side surface portion 211, the second side surface portion 221 may prevent permeation of gas generated by charging and discharging of the battery cell and gathered in the terrace portion T toward the electrode assembly 100.

It is preferable for the sum of the lengths (Y-axis direction) of the first upper surface portion 212 and the second upper surface portion 222 to be equal to the length (Y-axis direction) of the electrode assembly 100, which is because, if the sum of the lengths (Y-axis direction) of the first upper surface portion 212 and the second upper surface portion 222 is less than the length (Y-axis direction) of the electrode assembly 100, the part of the electrode assembly that is not be wrapped by the first upper surface portion 212 and the second upper surface portion 222 may have a relatively low height (Z-axis direction), resulting in a height (Z-axis direction) deviation.

On the other hand, if the sum of the lengths (Y-axis direction) of the first upper surface portion 212 and the second upper surface portion 222 is greater than the length (Y-axis direction) of the electrode assembly 100, the first upper surface portion 212 and the second upper surface portion 222 may overlap each other, and the overlapping part may have a relatively high height (Z-axis direction), resulting in a height (Z-axis direction) deviation.

Furthermore, it is preferable for the sum of the lengths (Y-axis direction) of the first lower surface portion 213 and the second lower surface portion 223 to be equal to the length (Y-axis direction) of the electrode assembly 100, which is because, if the sum of the lengths (Y-axis direction) of the first lower surface portion 213 and the second lower surface portion 223 is less than the length (Y-axis direction) of the electrode assembly 100, the part of the electrode assembly that is not be wrapped by the first lower surface portion 213 and the second lower surface portion 223 may have a relatively low height (Z-axis direction), resulting in a height (Z-axis direction) deviation.

On the other hand, if the sum of the lengths (Y-axis direction) of the first upper surface portion 212 and the second upper surface portion 222 is greater than the length (Y-axis direction) of the electrode assembly 100, the first upper surface portion 212 and the second upper surface portion 222 may overlap each other, and the overlapping part may have a relatively high height (Z-axis direction), resulting in a height (Z-axis direction) deviation.

Here, the length (Y-axis direction) of each of the first upper surface portion 212, the second upper surface portion 222, the first lower surface portion 213, and the second lower surface portion 223 may be a length (Y-axis direction) corresponding to half of the length (Y-axis direction) of the electrode assembly 100, in which case the first cover separator 210 and the second cover separator 220 are formed in the same shape, whereby the first cover separator 210 and the second cover separator 220 may be assembled to the electrode assembly 100 without distinction, which facilitates assembly.

The pouch case 300 may include an upper case 310, a lower case 320, and a connection portion configured to connect the same to each other as needed.

The upper case 310 may include an approximately hexahedral cup portion configured to receive a part of the electrode assembly 100 and an extension portion located outside the cup portion.

The lower case 320 is located so as to face the upper case 310, and may include an approximately hexahedral cup portion configured to receive a part of the electrode assembly 100 and an extension portion located outside the cup portion.

Of course, unlike FIGs. 2 and 4, the cup portion may be formed in only one of the upper case 310 and the lower case 320.

The pouch case 300 including the upper case 310 and the lower case 320 is made of a laminate sheet including an outer resin layer, a metal layer, and an inner resin layer in order to form the cup portion.

The outer resin layer, which is located on the outermost side of the pouch case 300, may be made of a heat-resistant polymer that exhibits excellent tensile strength, resistance to moisture permeation, and resistance to air transmission such that the outer resin layer exhibits high heat resistance and chemical resistance while protecting the electrode assembly. As an example, the outer resin layer may be made of nylon or polyethylene terephthalate; however, the present invention is not limited thereto.

The metal layer, which abuts the outer resin layer, corresponds to a barrier layer configured to prevent moisture or various gases from permeating into the battery from the outside. An aluminum thin film, which is lightweight and easily shapeable, may be used as a preferred material for the metal layer.

The inner resin layer is in direct contact with the electrode assembly, and therefore the inner resin layer must exhibit high insulation properties and high electrolytic resistance. In addition, the inner resin layer must exhibit high sealability in order to hermetically isolate the pouch case from the outside, i.e., a thermally-bonded sealed portion between inner layers must exhibit excellent thermal bonding strength.

The inner resin layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

In general, the pair of electrode leads 400, which is constituted by the positive electrode lead and the negative electrode lead, is electrically connected respectively to the electrode tab (110) bundles, more specifically a positive electrode tab bundle and a negative electrode tab bundle, by welding or the like, and is exposed to the outside of the pouch case.

The insulating film 500 is located on an upper surface and a lower surface of the electrode lead 400, which overlap the sealing portion of the pouch case 300 that is thermally fused, and is configured to prevent electricity generated by the electrode assembly 100 from flowing to the pouch case 300 via the electrode lead 400 and to maintain the sealed state of the pouch case 300.

Here, it is preferable for the insulating film 500 to be made of a non-conductive material, which does not conduct electricity well, and an insulating tape having a relatively small thickness while being easy to attach to the electrode lead 400 is generally used.

Specifically, the insulating film 500 may be made of at least one selected from the group consisting of polyimide (PI), polypropylene (PP), polyethylene (PE), polyethylene terephthalate (PET), and polyvinyl chloride (PVC: polyvinyl chloride), high density polyethylene (HDPE), and an epoxy resin, and is thermally fused and bonded to the inner resin layer of the pouch case through heat and pressure.

In addition, the present invention provides a battery cell manufactured by the battery cell manufacturing method and a battery module, a battery pack, or a device including the battery cell.

Those skilled in the art to which the present invention pertains will appreciate that various applications and modifications are possible within the category of the present invention based on the above description.

### (Description of Reference Symbols)

100: Electrode assembly
110: Electrode tab
200: Cover separator
210: First cover separator
211: First side surface portion 211': First through-hole
212: First upper surface portion 213: First lower surface portion
220: Second cover separator
221: Second side surface portion 221': Second through-hole
222: Second upper surface portion
223: Second lower surface portion
300: Pouch case
310: Upper case
320: Lower case
400: Electrode lead
500: Insulating film
T: Terrace portion

## Claims

1. A battery cell comprising:
an electrode assembly having an electrode tab protruding therefrom, the electrode assembly comprising a positive electrode, a separator, and a negative electrode;
a pair of cover separators located so as to wrap the electrode assembly, the pair of cover separators comprising a first cover separator and a second cover separator;
a pouch case configured to receive the electrode assembly and the pair of cover separators;
an electrode lead having one side connected to the electrode tab and an other side protruding outward from the pouch case; and
an insulating film located between the pouch case and the electrode lead.

2. The battery cell according to claim 1, wherein
the first cover separator comprises a first side surface portion in tight contact with one side surface of the electrode assembly, a first upper surface portion in tight contact with a part of an upper surface of the electrode assembly, and a first lower surface portion in tight contact with a part of a lower surface of the electrode assembly, and
the second cover separator comprises a second side surface portion in tight contact with an other side surface of the electrode assembly, a second upper surface portion in tight contact with a part of the upper surface of the electrode assembly, and a second lower surface portion in tight contact with a part of the lower surface of the electrode assembly.

3. The battery cell according to claim 2, wherein
the first side surface portion has a first through-hole configured to allow the electrode tab provided on one side of the electrode assembly to extend therethrough, and
the second side surface portion has a second through-hole configured to allow the electrode tab provided on an other side of the electrode assembly to extend therethrough.

4. The battery cell according to claim 2, wherein
a sum of lengths of the first upper surface portion and the second upper surface portion is equal to a length of the electrode assembly, and
a sum of lengths of the first lower surface portion and the second lower surface portion is equal to the length of the electrode assembly.

5. The battery cell according to claim 4, wherein the length of each of the first upper surface portion, the second upper surface portion, the first lower surface portion, and the second lower surface portion is half of the length of the electrode assembly.

6. The battery cell according to claim 1, wherein the separator and the pair of cover separators are made of the same material.

7. The battery cell according to claim 2, wherein abutting parts of the first cover separator and the second cover separator are connected to each other.

8. The battery cell according to claim 2, wherein a width of each of the first cover separator and the second cover separator is equal to or greater than a width of the electrode assembly.

9. The battery cell according to claim 7, wherein the abutting parts of the first cover separator and the second cover separator are connected to each other via an adhesive member.

10. The battery cell according to claim 7, wherein the abutting parts of the first cover separator and the second cover separator are connected to each other through a lamination process.

11. A battery module comprising the battery cell according to any one of claims 1 to 10.
